# EUROPEAN PATENT APPLICATION

(11) **EP 1 806 559 A1**
(43) Date of publication of application: **11.07.2007**
(21) Application number: 06100189.7
(22) Date of filing: 10.01.2006
(51) Int. Cl.: G01C 15/00

(54) **Surveying procedure and system for a high-rise structure**

(71) Applicant: Leica Geosystems AG, 9435 Heerbrugg (CH)
(72) Inventor: VAN CRANENBROECK, Joel, BE-5530, Mont / Yvoir (BE)
(74) Representative: Harmann, Bernd-Günther

(57) **Abstract**

The invention concerns a surveying procedure for a structure (1'), more particularly a high-rise building, to be erected which has an ideal axis (a) oriented relative to the gravity vector. At least three reference points (A₅' , B₅' , C₅' ) are defined by receivers (AA, BB, CC) of a satellite-based positioning system (2), on the uppermost construction level (E₅) of the structure (1'). The position of an electro-optical geodesic instrument (3) assigned to the structure (1') is determined relative to the three reference points (A₅', B₅', C₅') and to a singular point (P₅') of structure (1'). The tilt (α₅) of a real line (a') developing from the ideal axis (a) under tilt effects acting on the structure (1; 1') is acquired gravimetrically, more particularly with a gravimetric tilt sensor (Is). A static coordinate system tied to ideal axis (a) is transformed to a coordinate system tied to real line (a') and depending dynamically on tilt (α5), by adducing the at least three reference points (A₅', B₅', C₅'), the relative position of the geodesic instrument (3), and the tilt (α₅) of real line (a'). By the repetitive steps of gravimetric acquisition of tilt (α₅) of real line (a') and of referencing and matching of the geodesic instrument (3) to the coordinate system that dynamically depends on tilt (α₅), a precise and reliable surveying procedure can be provided for a structure (1; 1') of almost any height, and more particularly for a high-rise building, that is to be erected and is subject to tilt effects, and hampers the use of ground-level reference points.

## Description

The invention concerns a surveying procedure for a building to be erected, and more particularly for a high-rise building, according to the preamble of claim 1, as well as a system for coordinate transformation for referencing and matching of at least one geodesic measuring instrument according to the preamble of claim 7.

From the prior art, various procedures and devices for surveys during and after the phase of erection of a high-rise building are known. High-rise buildings are subject to strong external tilt effects caused, for instance, by wind pressures, unilateral thermal effects by exposure to sunlight, and unilateral loads. Such effects are a particular challenge in the phase of construction of a high-rise building, inasmuch as the high-rise building under construction is also subject to tilt effects, and will at least temporarily lose its - as a rule exactly vertical - alignment. Yet construction should progress in such a way that the building is aligned as planned, and particularly so in the vertical, when returning into an untilted basic state.

It is essential that a straight element be constructed that theoretically, even when moving around its design centre point due to varying loads, would have an exactly vertical alignment when all biasing conditions are neutralised. Because of differential raft settlement, differential concrete shortening, and construction tolerances, this ideal situation will rarely be achieved.

For this reason a regular matching of the reference system is required for surveys during the construction phase of a high-rise building once this has attained a certain height or a certain ratio of height to cross section.

Up to now, surveying on high-rise buildings is done by geodesic electro-optical total stations, tachymetres, or theodolites yielding non-contact optical measurements of the points to be surveyed, these instruments periodically being referenced to fixed external reference points with known coordinates.

Total stations either compensate tilt by means of inclinometres, or allow for measured tilt mathematically. Beyond certain threshold values or under conditions of excessive tilt noise, however, such a compensation or suppression becomes impossible.

The precision of the entire surveying procedure depends on the reference points serving as fixed points for the total station; therefore, points are selected for which absolute constancy of the position is guaranteed. Primarily points close to ground are suitable that are not subject to influences producing shifts. However, increasing construction heights, possibly aggravated by densely built-up surroundings, give rise to difficulties in the use of ground-level fixed points, inasmuch as the distance between the total station installed on the uppermost construction level of the high-rise building and the reference points becomes excessive for exact referencing of the total station while the relative distances between the fixed points become too small, particularly so in heavily developed zones. Beyond a certain threshold height, it becomes altogether impossible to use ground-level reference points.

Particularly in the Far East, demand increases for high-rise buildings having heights beyond this threshold and a ratio of height to cross section that gives rise to strong tilt and sway of the building.

The strong movements of the structure create a number of problems for the correct design of controls. It will be essential at any particular instant in time to exactly know how much the building is off from its design position, and at the same time to know the precise position of the total station. The situation is further complicated by vibrations in the building due to the construction work and by movements of the building making it very difficult, if not impossible, to keep instruments levelled.

It is a task of the invention, therefore, to solve these problems and provide a precise and reliable surveying procedure for a structure of almost any height that is to be erected, and particularly for a high-rise building subject to tilt effects and hampered use of ground-level reference points.

This task is achieved by realising the characterising features of the independent claims. Features developing the invention in an alternative or advantageous way can be seen from the dependent claims.

In what follows, the procedure and system according to the invention are described in general as well as in detail, purely in terms of examples and specific embodiments schematically represented in the drawings. More particularly,
- Fig. 1: shows an structure erected in part, in a tilted state with straight real line relative to the untilted structure with the straight ideal axis, and having the surveying arrangement according to the invention; and
- Fig. 2: shows the structure erected in part, in a tilted state with curved real line modelled beyond the uppermost construction level for the structure yet to be erected.

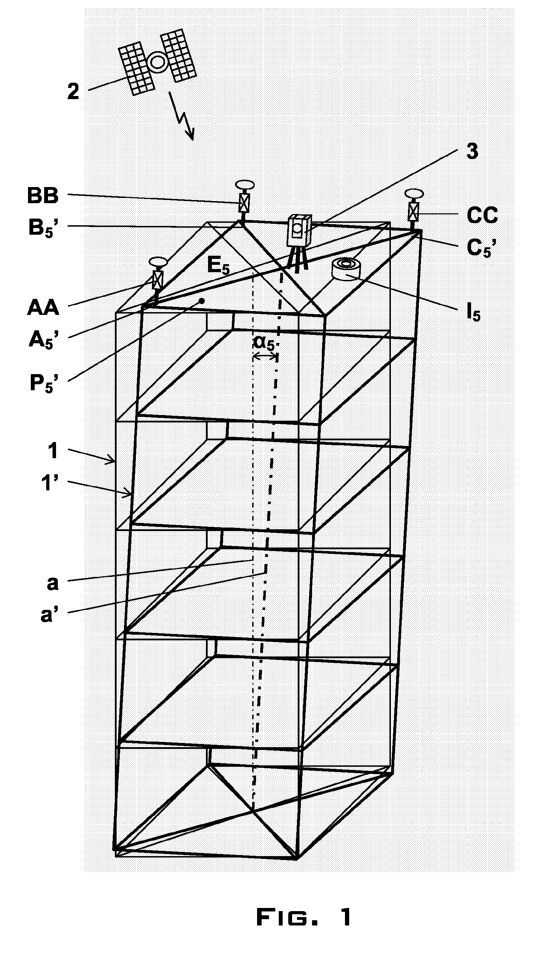

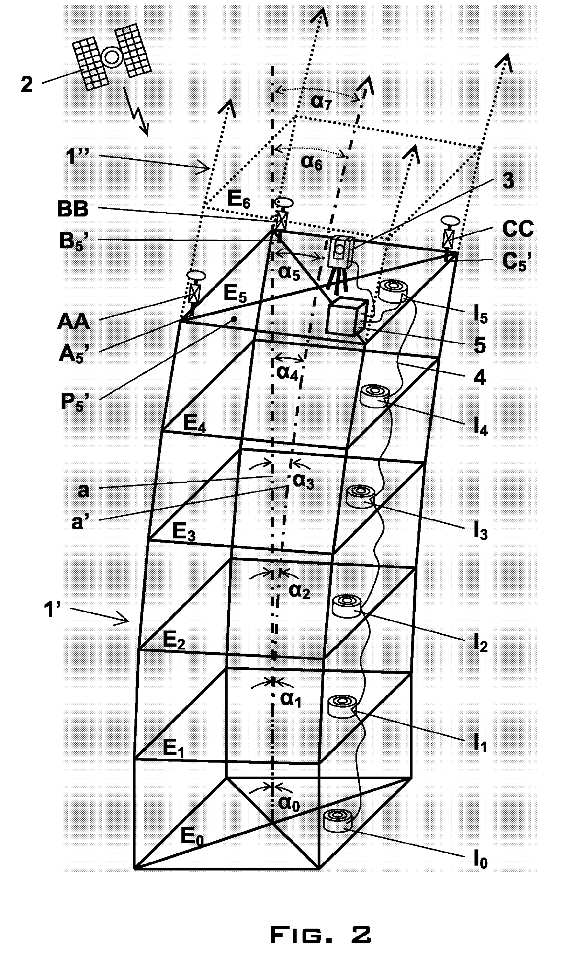

Figure 1 shows the structure 1', i.e. a building erected in part, in a real tilted state having a straight real line a' relative to the theoretical untilted structure 1 having the ideal axis "a", whereas Figure 2 shows the structure 1' in a tilted state having a curved real line a' modelled beyond the uppermost construction level E₅ for the structure 1" yet to be erected. In the following, Figures 1 and 2 are described together.

The invention relies on the use of at least three receivers AA, BB, CC of a satellite-based positioning system 2 in order to determine the positions of three reference points A₅', B₅', C₅', more particularly reference points equipped with reflectors, on the current top level E₅ of construction of an untilted structure 1 or an tilted structure 1' in the phase of erection that is located in the reception zone of the satellites. For instance, each receiver AA, BB, CC is mounted on a pole having a reflector and being placed on the reference point A₅', B₅' or C₅', respectively. A particularly suitable satellite-based positioning system 2 is GPS, preferably combined with the use of corrective data from a reference station enhancing the precision of positioning, e.g. known as DGPS or RTK. Of course, other satellite-based positioning systems having sufficient precision can be used, particularly so GLONASS or GALILEO.

The structure 1' has an ideal axis "a" aligned relative to the gravity vector and referring to the planned ideal state of the structure 1 in its basic state not subject to tilt effects. The reference points A₅', B₅', C₅' that have been ascertained via the receivers AA, BB, CC are located with an electro-optical geodesic instrument 3 associated with the structure 1' and more particularly positioned in such a way on the structure's top level E₅ of construction that a sighting path exists to the reference points A₅', B₅', C₅'. In this way the position of the instrument 3 relative to the three reference points A₅', B₅', C₅' can be acquired, and the instrument 3 referenced to the absolute coordinate system of the satellite-based positioning system 2. Then the position of the instrument 3 relative to a singular point P₅' of the structure 1¹ is determined, for instance by optical ranging of a particular point of the structure 1¹ or by placing the instrument 3 on such a point. As these points A₅', B₅', C₅' preferably are situated on the same uppermost construction level E₅ as the geodesic instrument 3, the receivers AA, BB, CC will safely receive their signals, and the instrument 3 will always find suitable a sighting path. Using this arrangement and procedure a referencing of the instrument 3 is possible.

Due to motions in the system, however, the situation in the reference system thus constructed does not correspond to the future structure in its neutral or static, untilted state. For this reason the current system is compared with the system of the finished building in its static condition while referring to the structure being erected, that is, to data concerning the construction progress that must be achieved. This building will always be gravity-aligned. For this reason tilt α₅ of the structure is determine gravimetrically, more particularly with a tilt sensor I₅ positioned on the uppermost construction level E₅. In the following, an ideal vertical axis and more particularly the central axis of the untilted structure in its ideal state is used as the point of departure for a reference line for tilt. The building's axis will depart from its original position and, where applicable, from its original shape when the structure is subject to tilt effects and the structure is tilted. The new axis of the tilted structure that has developed from the ideal axis "a" of the untilted structure is called the real line a' in what follows. The real line a' passes perpendicularly through the construction level, e.g. E₅, and more particularly through all construction levels, e.g. E₀, E₁, E₂, E₃, E₄, E₅, see Figure 2. This real line a' could be a straight line when the building tilts about an axis of tilt, as shown in Figure 1. In practice, however, tilt effects become stronger with increasing height of the building, so that the tilt will be irregular. Thus, the real line a' can be an arc, as shown in Figure 2, a curve defined mathematically, or any free shape. Using the gravimetric tilt determination described above, therefore, one determines the tilt of the real line a' away from the ideal axis "a", and more particularly that on the uppermost construction level E₅, that results from tilt effects acting on the structure 1'.

By adducing the absolute positions of the at least three satellite-determined reference points A₅', B₅', C₅', the position of the geodesic instrument 3 relative to the structure 1', particularly relative to the singular point P₅' and the tilt α₅ of the real line a', one transforms a static coordinate system tied to the ideal axis "a" and referring to the untilted structure's 1 planned static state to a coordinate system that is tied to the real axis a' and dynamically depends on the tilt α₅. This dynamic coordinate system refers to the structure 1' while depending on its tilt α₅. Periodically the tilt α₅ of the real line a' is determined gravimetrically, e.g. by the gravimetric tilt sensor I₅, and the geodesic instrument 3 is referenced and matched to the dynamically tilt-dependent coordinate system. Hence it is possible to create a reference system for the geodesic instrument 3 which essentially continuously adjusts to the current tilt α₅ of the structure 1'.

These steps can be repeated, always for the current uppermost construction level E₀, E₁, E₂, E₃, E₄, E₅, as construction progresses, while the values of tilt α₀, α₁, α₂, α₃, α₄, α₅ of the real line a' are acquired at closely spaced times on a number of construction levels E₀, E₁, E₂, E₃, E₄, E₅ and the real line a' which more particularly is curved is modelled by adducing these tilts α₀, α₁, α₂, α₃, α₄, α₅., see Figure 2. In a further development of the invention, the real line a' modelled through these tilts α₀, α₁, α₂, α₃, α₄, α₅ is used to model the values of tilt α₆, α₇ or the further pattern of the tilts α₆, α₇ of the curved real line a' beyond the uppermost construction level E₅ for the part of the structure 1" yet to be erected, here construction level E₆, see Figure 2, and construction level E₇, not shown. Thus, the real line a' is extended mathematically in an upward, approximately vertical direction, and hence serves as a reference for transformation of the coordinate system. In this way the tilt α₆, α₇ of the part of the structure 1" that has not yet been erected is predicted, so that in optical measurements upwards the deformation of the structure 1" foreseen under the influence of current tilt effects is taken into account.

The invention moreover comprises a system for coordinate transformation for the referencing and matching of at least one geodesic instrument 3 situated on a construction level E₅ of a structure 1, 1' erected with reference to an ideal axis "a" oriented relative to the gravity vector. The system for coordinate transformation has at least two gravimetric tilt sensors, in Figure 2 five gravimetric tilt sensors I₀, I₁, I₂, I₃, I₄, I₅, that can be set up on different construction levels E0, E₁, E₂, E₃, E₄, E₅ of the structure 1¹ and can be used to measure the tilts α₀, α₁, α₂, α₃, α₄, as of the real line a' away from the ideal axis "a" that result from the tilt effects acting on the structure 1. These tilt data can be transmitted via a communication network 4, e.g. a wired or wireless local area network. The system for coordinate transformation further comprises means for coordinate transformation 5, e.g. a personal computer, so designed and linked to the tilt sensors I₀, I₁, I₂, I₃, I₄, I₅ via the communication network 4 that with a knowledge of the tilts α₀, α₁, α₂, α₃, α₄, α₅ of the real line a' and of the corresponding construction levels E₀, E₁, E₂, E₃, E₄, E₅, a static coordinate system tied to the ideal axis "a" is transformed to a dynamically tilt-dependent coordinate system tied to the real line a'.

In a further development of the invention, at least three gravimetric tilt sensors, in Figure 2 five gravimetric tilt sensors I₀, I₁, I₂, I₃, I₄, I₅, are provided with which the tilts α₀, α₁, α₂, α₃, α₄, α₅ of a curved real line a' can be acquired on different construction levels E₀, E₁, E₂, E₃, E₄, E₅, see Figure 2. The means of coordinate transformation 5 are so designed and linked to the tilt sensors I₀, I₁, I₂, I₃, I₄, I₅ via the communication network 4 that the static coordinate system tied to the ideal axis "a" is transformed to a dynamically tilt-dependent coordinate system tied to the curved real line a'.

The electro-optical geodesic instrument 3 and more particularly a total station is so designed and linked to the tilt sensors I₀, I₁, I₂, I₃, I₄, I₅ and to the means of coordinate transformation 5 via the communication network 4 that the geodesic instrument 3 can be referenced and matched to the dynamically tilt-dependent coordinate system.

Although the present invention has been described in terms of a single embodiment, it is to be understood that the disclosure is not to be interpreted as limiting. Various alterations and modifications will no doubt become apparent to those skilled in the art after having read the above disclosure.

## Claims

1. Surveying procedure for a structure (1; 1'), more particularly a high-rise building, to be erected and having an ideal axis (a) oriented relative to the gravity vector,
comprising the steps of
• definition of at least three reference points (A₅', B₅', C₅') by receivers (AA, BB, CC) of a satellite-based positioning system (2) on the current uppermost construction level (E₅) of the structure (1¹),
• determination of the position of an electro-optical geodesic instrument (3) assigned to structure (1¹), relative to the three reference points (A₅', B₅', C₅' and to a singular point (P₅') of the structure (1'),
• gravimetric acquisition of the tilt (α₅) of a real line (a') developing from the ideal axis (a) under tilt effects acting on the structure (1; 1'), more particularly with the aid of a gravimetric tilt sensor (I₁),
• transformation of a static coordinate system tied to the ideal axis (a), to a coordinate system tied to the real line (a') and dynamically depending on the tilt (α₅), by adducing
□ the at least three reference points (A₅', B₅', C₅'),
□ the relative position of the geodesic instrument (3), and
□ the tilt (α₅) of the real line (a')
and the repetitive steps of
• gravimetric acquisition of the tilt (α₅) of the real line (a') and
• referencing and matching of the geodesic instrument (3) to the coordinate system that dynamically depends on the tilt (α₅).

2. Surveying procedure according to claim 1,
**characterised in that**
the steps and repetitive steps are repeated while construction of the structure (1; 1') progresses, always for the current uppermost construction level (E₀, E₁, E₂, E₃, E₄, E₅) .

3. Procedure according to claim 2,
**characterised in that**
• the tilts (α₀, α₁, α₂, α₃, α₄, α₅) of the real line (a') are acquired at closely spaced times on several construction levels (E₀, E₁, E₂, E₃, E₄, E₅) and
• the real line (a') is modelled by adducing the tilts (α₀, α₁, α₂, α₃, α₄, α₅).

4. Procedure according to claim 3,
**characterised in that**
the real line (a') is modelled as a curve.

5. Procedure according to claim 4,
**characterised in that**
a further pattern of the tilts (α₆, α₇) of the curved real line (a') of the structure (1') is modelled beyond the uppermost construction level (E₅) for the structure (1") yet to be erected, by adducing the real line (a') modelled by the acquired tilts (α₀, α₁, α₂, α₃, α₄, α₅).

6. Procedure according to one of claims 1 to 3,
**characterised in that**
the real line (a') is modelled as a straight line.

7. System for coordinate transformation for referencing and matching of at least one geodesic instrument (3) situated on a construction level (E₅) of a structure (1; 1') erected with reference to an ideal axis (a) oriented relative to the gravity vector, with
• at least two gravimetric tilt sensors (I₀, I₁, I₂, I₃, I₄, I₅) that can be positioned on different construction levels (E₀, E₁, E₂, E₃, E₄, E₅) of the structure (1; 1'), and used to acquire on the different construction levels (E₀, E₁, E₂, E₃, E₄, E₅) the tilts (α₀, α₁, α₂, α₃, α₄, α₅) of a real line (a') developing from the ideal axis (a) under tilt effects acting on structure (1; 1'),
• a communication network (4) by which at least the tilts (α₀, α₁, α₂, α₃, α₄, α₅) can be transmitted, and
• means of coordinate transformation (5) so designed and linked to the tilt sensors (I₀, I₁, I₂, I₃, I₄, I₅) via the communication network (4) that with a knowledge of the tilts (α₀, α₁, α₂, α₃, α₄, α₅) of the real line (a') and of the applicable construction levels (E₀, E₁, E₂, E₃, E₄, E₅)
□ a static coordinate system tied to the ideal axis (a) is transformed
□ to a coordinate system tied to the real line (a') and dynamically depending on the tilts (α₀, α₁, α₂, α₃, α₄, α₅).

8. System according to claim 7,
**characterised in that**
• at least three gravimetric tilt sensors (I₀, I₁, I₂, I₃, I₄, I₅) are provided with which the tilts (α₀, α₁, α₂, α₃, α₄, α₅) of a curved real line (a') can be acquired on the different construction levels (E₀, E₁, E₂, E₃, E₄, E₅), and
• the means of coordinate transformation (5) are so designed and linked to the tilt sensors (I₀, I₁, I₂, I₃, I₄, I₅) via the communication network (4) that
□ the static coordinate system tied to the ideal axis (a) is transformed to
□ a coordinate system tied to the curved real line (a') and dynamically depending on the tilts (α₀, α₁, α₂, α₃, α₄, α₅).

9. System according to claims 7 or 8,
**characterised by**
an electro-optical geodesic instrument (3), and more particularly a total station, so designed and linked to the tilt sensors (I₀, I₁, I₂, I₃, I₄, I₅) and to the means of coordinate transformation (5) via the communication network (4) that the electro-optical geodesic instrument (3) can be referenced and matched to the coordinate system that dynamically depends on the tilts (α₀, α₁, α₂, α₃, α₄, α₅).
